# DEMANDE DE BREVET EUROPEEN

(11) **EP 1 607 311 A1**
(43) Date de publication de la demande: **21.12.2005**
(21) Numéro de dépôt: 05291222.7
(22) Date de dépôt: 07.06.2005
(51) Int. Cl.: B62D 25/08, B62D 29/00

(54) **Elément structurel hybride pour véhicule automobile et véhicule équipé d'un tel élément**

(30) Priorité: 14.06.2004 FR 0406426
(71) Demandeur: Faurecia Bloc Avant, 92000 Nanterre (FR)
(72) Inventeur: Girolimetto, Yves, 25260 Etouvans (FR)
(74) Mandataire: Domenego, Bertrand

(57) **Abrégé**

Cet élément structurel pour véhicule automobile comprend un premier et un deuxième corps métalliques (3,5) distincts et séparés comportant des régions de chevauchement (21,27) se recouvrant, et une pièce de renfort (7) en matière plastique surmoulée sur le premier et le deuxième corps métalliques. Selon un aspect de l'invention, les régions de chevauchement (21,27) du premier et du deuxième corps métalliques comprennent des zones discrètes (23,30) en retrait de bords du premier et du deuxième corps métalliques, lesdites zones discrètes (23,30) se recouvrant et formant un passage traversant (41) recevant une partie de liaison (50) de la pièce de renfort (7), le contour du passage (41) étant délimité pour partie par un bord (43) de la zone en retrait du premier corps métallique (3) et pour partie par un bord (47) de la zone en retrait du deuxième corps métallique (5).

Application par exemple à la réalisation de faces avant de véhicules automobiles.

## Description

La présente invention concerne le domaine des éléments structurels pour véhicule automobile et en particulier un élément structurel pour véhicule automobile du type comprenant :
- un premier et un deuxième corps métalliques distincts et séparés, des régions de chevauchement du premier et du deuxième corps métalliques se recouvrant, et
- une pièce de renfort en matière plastique surmoulée sur le premier et le deuxième corps métalliques, la pièce de renfort comprenant au moins une partie de liaison des corps métalliques.

L'invention s'applique en particulier à la réalisation de faces avant pour véhicule automobile. De telles faces avant sont qualifiées d'hybrides, du fait de l'utilisation combinée de métal et de matière plastique pour les réaliser.

Le document US 2003/0070387 décrit un élément structurel du type précité, dans lequel les parties de liaison sont des rivets, qui font parties de la pièce de renfort en matière plastique, et qui traversent des orifices ménagés dans les régions de chevauchement des corps métalliques.

Un but de l'invention est de fournir un élément structurel utilisant un autre mode de liaison des corps métalliques.

A cet effet, l'invention a pour objet un élément structurel du type précité caractérisé en ce que :
- la région de chevauchement du premier corps métallique comprend une première zone discrète en retrait d'un bord du premier corps métallique,
- la région de chevauchement du second corps métallique comprend une second zone discrète en retrait d'un bord du deuxième corps métallique, et
- les zones discrètes en retrait des premier et deuxième corps métalliques se recouvrent au moins partiellement et forment un passage traversant recevant la partie de liaison de la pièce de renfort en matière plastique, le contour du passage étant délimité pour partie par un bord de la zone en retrait du premier corps métallique et pour partie par un bord de la zone en retrait du deuxième corps métallique.

Selon des modes particuliers de réalisation, l'élément structurel peut comprendre l'une ou plusieurs des caractéristiques suivantes, prise(s) isolément ou selon toutes les combinaisons techniquement possibles :
- le contour du passage est ouvert ;
- le contour du passage est fermé ;
- un bord d'une zone en retrait délimitant le contour du passage présente un relief pour améliorer l'ancrage de la partie de liaison sur ledit bord ;
- le relief est formé par un évidement ménagé dans ledit bord ;
- le relief est formé par un ergot en saillie dudit bord ;
- le relief présente un profil étagé avec des angles.

L'invention concerne également un véhicule automobile comprenant un élément structurel tel que défini ci-dessus.

La présente invention et ses avantages seront mieux compris à l'étude de la description détaillée d'un mode de réalisation pris à titre d'exemple nullement limitatif, illustrée par les dessins annexés, sur lesquels :
- la figure 1 est une vue schématique en perspective d'une face avant pour véhicule automobile suivant l'invention,
- la figure 2 est une vue schématique en perspective d'une traverse métallique supérieure de la face avant de la figure 1,
- la figure 3 est une vue schématique en perspective, partielle et agrandie de la traverse métallique supérieure et d'un montant de la face avant de la figure 1, avant assemblage,
- la figure 4 est une vue de dessus, partielle et agrandie d'un passage recevant une partie de liaison et situé sur le dessus de la traverse supérieure de la face avant de la figure 1,
- la figure 5 est une vue de face, partielle et agrandie d'un passage recevant la partie de liaison et situé à l'avant de la traverse supérieure de la face avant de la figure 1,
- la figure 6 est une vue analogue à la figure 5, illustrant un passage recevant la partie de liaison selon une première variante de la face avant de la figure 1, et
- la figure 7 est une vue analogue à la figure 5, illustrant un passage recevant la partie de liaison selon une deuxième variante de la face avant de la figure 1.

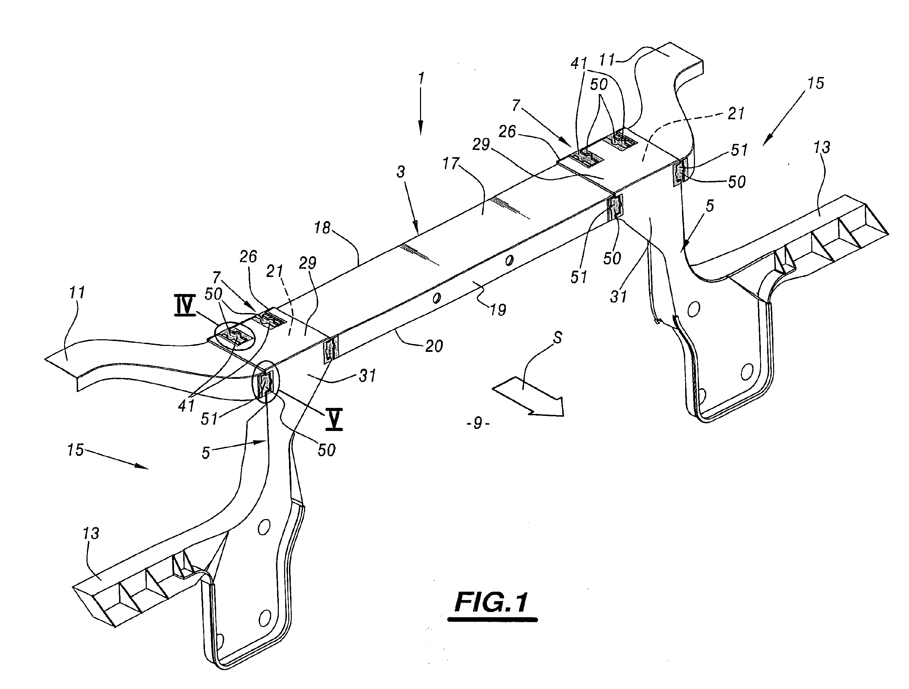

Dans tout ce qui suit, les orientations utilisées sont des orientations habituelles d'un véhicule automobile. Ainsi, les termes « avant », « arrière », « droite », « gauche », « supérieur » et « inférieur » s'entendent par rapport à la position d'un conducteur et au sens de marche du véhicule, matérialisé par une flèche S sur la figure 1.

La figure 1 représente une face avant 1 qui comprend une traverse métallique supérieure 3 qui s'étend sensiblement horizontalement et deux montants latéraux métalliques 5 qui s'étendent sensiblement verticalement. Les deux montants latéraux 5 sont espacés latéralement l'un de l'autre et prolongent la traverse supérieure 3 vers le bas.

La face avant 1 comprend en outre une pièce de renfort 7 en matière plastique surmoulée sur la traverse 3 et les montants 5, et dont des parties sont visibles en grisé.

Une telle face avant 1 est destinée à être montée à l'avant d'un véhicule automobile pour supporter divers équipements tels que des blocs optiques, un groupe moto-ventilateur (GMV), un radiateur, un condenseur...

Ainsi, les montants 5 délimitent entre eux un espace central 9 de réception par exemple d'un radiateur, d'un condenseur et d'un groupe moto-ventilateur.

De même, les extrémités latérales 11 de la traverse 3 délimitent, avec des branches 13 prolongeant les montants 5 latéralement vers l'extérieur, des espaces 15 de réception de blocs optiques.

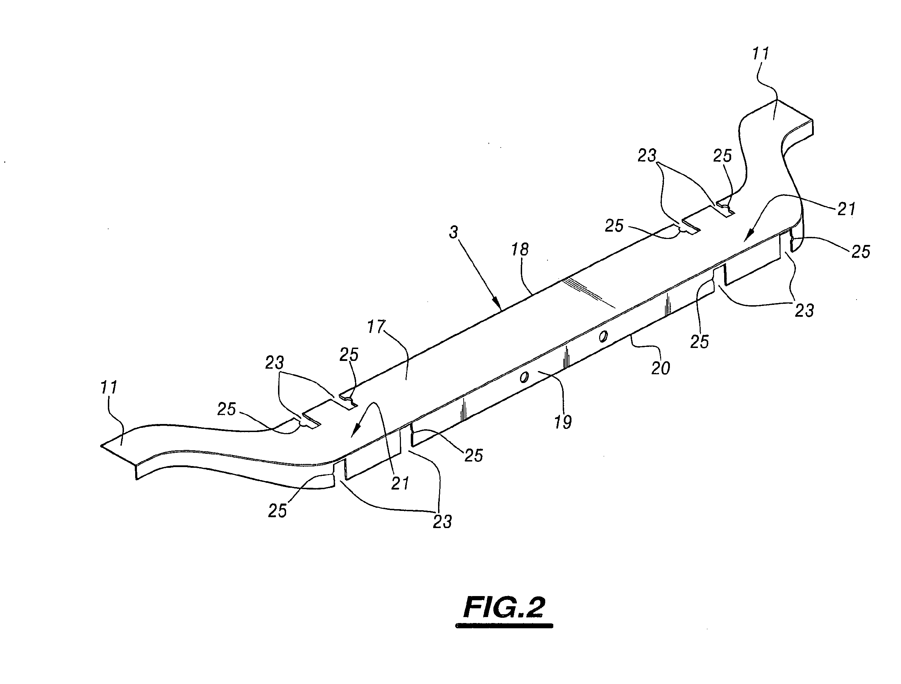

Comme on peut mieux le voir sur la figure 2, la traverse 3 est un profilé de section verticale sensiblement en L inversé avec une aile supérieure 17 sensiblement horizontale, prolongée à son extrémité avant vers le bas par une aile avant 19.

La traverse supérieure 3 comprend deux régions 21 de chevauchement avec les montants 5. Ces régions 21 sont espacées l'une de l'autre ainsi que des extrémités latérales 11. La traverse 3 présente, au-delà de ces régions 21, des décrochements vers l'arrière terminés par les extrémités latérales 11.

Chaque région de chevauchement 21 est munie de zones en retrait 23 ménagées sur le bord arrière 18 de l'aile supérieure 17 de la traverse 3 et le bord libre inférieur 20 de l'aile avant 19 de la traverse 3. Ces zones en retrait 23 sont des zones discrètes espacées les unes des autres et servent comme on le verra par la suite, à la formation de passages de réception de parties de liaison de la pièce de renfort 7 (figure 1) en matière plastique.

Les zones en retrait 23 sont en l'occurrence des encoches de forme rectangulaire. Chaque région de chevauchement 21 comprend deux encoches 23 arrière ménagées dans l'aile supérieure 17 et s'étendant vers l'avant depuis le bord arrière 18, en étant distantes latéralement l'une de l'autre, et deux encoches 23 avant ménagées dans l'aile avant 19, et s'étendant vers le haut depuis le bord inférieur 20 en étant distantes latéralement l'une de l'autre.

Dans l'exemple illustré, les encoches 23 présentent chacune un bord muni d'un relief prévu sous la forme d'un évidement 25 en arc de cercle.

Les montants 5 ont des formes sensiblement symétriques l'une de l'autre par rapport au plan vertical médian de la face avant 1. Seule la structure du montant 5 droit (à gauche sur la figure 1), ainsi que sa liaison avec la traverse 3 seront donc décrites par la suite.

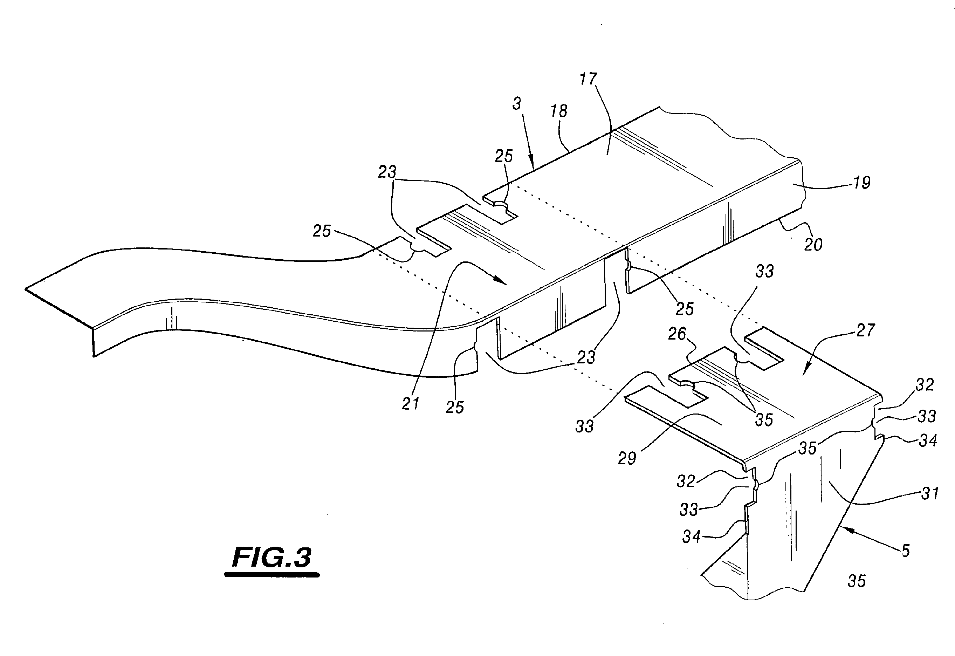

Comme illustré sur la figure 3, le montant 5 présente une extrémité supérieure formant une région de chevauchement 27 destinée à recouvrir la région de chevauchement 21 correspondante de la traverse 3. La région de chevauchement 27 du montant 5 présente une section verticale correspondant à celle de la traverse 3, c'est-à-dire une section sensiblement en L inversé avec une aile supérieure 29 sensiblement horizontale prolongée à partir d'un bord avant par une aile avant 31 s'étendant vers le bas.

La région de chevauchement 27 du montant 5 présente des zones en retrait 33 ménagées sur un bord arrière libre 26 de l'aile supérieure 29, et sur des bords latéraux libres 34 de l'aile avant 31. Ces zones en retrait 33 sont des zones discrètes espacées les unes des autres et servent, comme on le verra par la suite, à la formation de passages dans le montant 5 et la traverse 3, lesdits passages étant destinés à recevoir des parties de liaison de la pièce 7 (figure 1) en matière plastique.

Les zones en retrait 33 du montant 5 sont en l'occurrence des échancrures de formes rectangulaires. Le montant 5 présente deux échancrures 33 arrière ménagées dans l'aile supérieure 29 et s'étendant vers l'avant depuis le bords arrière 26 de l'aile supérieure 29 du montant 5, et deux échancrures 33 avant ménagées dans l'aile avant 31 et s'étendant latéralement depuis les bords latéraux 34 de l'aile avant 31 du montant 5.

Les bords des échancrures 33 comportent chacun un relief. Les reliefs sont, dans l'exemple représenté, des évidements 35 en arc de cercle.

Lorsque le montant 5 est placé sur la traverse 3, la région de chevauchement 27 du montant 5 vient recouvrir la région de chevauchement 21 de la traverse 3. L'aile supérieure 29 du montant 5 vient en contact avec la surface supérieure de l'aile supérieure 17 de la traverse 3, et l'aile avant 31 du montant 5 vient en contact avec la surface avant de l'aile avant 19 de la traverse 3.

Les échancrures 33 du montant 5 sont disposées et réparties de façon à venir en recouvrement chacune avec une encoche 23 de la région de chevauchement 21 correspondante de la traverse 3. Plus précisément, chaque échancrure 33 arrière du montant 5 est destinée à recouvrir une encoche 23 arrière correspondante de la traverse 3, et chaque échancrure 33 avant du montant 5 est destinée à recouvrir une encoche 23 avant correspondante de la traverse 3.

Comme cela est par exemple visible sur la figure 1, l'aile supérieure 29 du montant 5 et l'aile supérieure 17 de la traverse 3 sont sensiblement de même longueur de façon que leur bords arrières respectifs 26, 18 sont sensiblement alignés lorsque le montant 5 est placé sur la traverse 3.

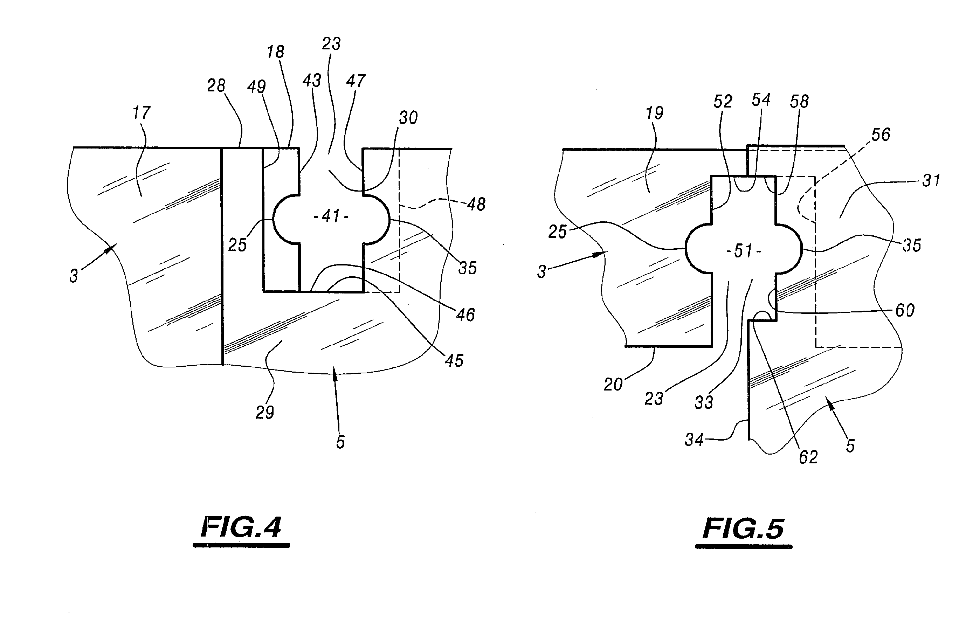

Comme illustré sur la figure 4, chaque encoche 23 arrière de la traverse 3 et l'échancrure 33 arrière correspondante du montant 5 forment un passage 41 arrière traversant l'aile supérieure 29 du montant 5 et l'aile supérieure 17 de la traverse 3. L'encoche 23 arrière et l'échancrure 33 arrière considérées se recouvrent de façon que le passage 41 arrière présente un contour ouvert débouchant à l'arrière de la traverse 3 et du montant 5. Le contour présente un profil essentiellement rectangulaire.

L'encoche 23 et l'échancrure 33 sont décalées de façon que la traverse 3 s'étend partiellement en travers de l'échancrure 33, et le montant 5 s'étend partiellement en travers de l'encoche 23. Le passage 41 arrière est constitué par les zones se recouvrant de l'encoche 23 et de l'échancrure 33.

Le contour du passage 41 arrière est délimité pour partie par un bord de l'échancrure 33 arrière du montant 5, et pour partie par un bord de l'encoche 23 arrière de la traverse 3. Plus précisément, le contour comprend une première partie longitudinale formée par une première portion 43 du bord de l'encoche 23 arrière de la traverse 3, une partie de fond transversale formée par des portions alignées 45, 46 des bords de l'échancrure 33 et de l'encoche 23, et une deuxième partie longitudinale formée par une première portion 47 du bord de l'échancrure 33 arrière.

C'est dans les premières portions 43 et 47 des bords de l'encoche 23 arrière et de l'échancrure 33 que les évidements 25, 35 en arc de cercle soit prévus.

Tel que représenté sur la figure 4, le montant 5 se situe au-dessus de la traverse 3. Une seconde portion 48 du bord de l'encoche 23 arrière est masquée par le montant 5. Une seconde portion 49 du bord de l'échancrure 33 arrière se situe en regard d'une zone pleine de la traverse 3.

Comme illustré sur la figure 5, chaque encoche 23 avant de la traverse 3 et l'échancrure 33 avant correspondante du montant 5 forment un passage 51 avant traversant l'aile avant 31 du montant 5 et l'ail avant de la traverse 3.

Dans l'exemple représenté, un bord de l'encoche 23 avant présente une première portion verticale 52, s'étendant vers l'intérieur de la travers 3 à partir du bord inférieur 20 de l'aile avant 19 et présentant un relief 25, une portion de fond horizontale 54 prolongeant la première portion verticale 52, et une deuxième portion verticale 56 prolongeant la portion de fond 54 et rejoignant le bord inférieur 20. Le bord de l'échancrure 33 avant comprend une portion supérieure horizontale 58 s'étendant vers l'intérieur du montant 5 depuis le bord latéral 34 du montant 5, une portion de fond verticale 60, prolongeant la portion supérieure 58 et présentant un relief 35, et une portion inférieure horizontale 62 prolongeant la partie de fond 60 en rejoignant le bord latéral 34.

Le montant 5 recouvre la traverse 3 de façon que le bord latéral 34 du montant 5 est aligné suivant la direction longitudinale (perpendiculaire au plan de la figure 4) avec l'encoche 23 avant. Le bord latéral 34 est situé entre les première et deuxième portions 52, 56 du bord de l'encoche 23 avant. La première portion 52 du bord de l'encoche 23 avant est découverte, et la deuxième portion 56 du bord de l'encoche 23 avant est masquée par le montant 5. La portion de fond 54 de l'encoche 23 avant et la portion supérieure 58 de l'échancrure 33 avant sont situées au même niveau et sont alignées. La portion inférieure 62 du bord de l'échancrure 33 avant est décalée vers le haut relativement au bord inférieur 20 de l'aile avant 19 de la traverse 3.

Le passage 51 avant présente un contour ouvert. En parcourant le contour du passage 51 avant d'un côté de son ouverture au côté opposé, ledit contour est délimité successivement par : la première portion 52 du bord de l'encoche 23 avant, la portion de fond 54 du bord de l'encoche 23 avant et la portion supérieure 58 du bord de l'échancrure 33 avant du montant 5, la portion de fond 60 du bord de l'échancrure 33 avant, la portion inférieure 62 du bord de l'échancrure 33 avant et le bord latéral 34 du montant 5.

Comme représenté sur la figure 1, la pièce de renfort 7 comprend des parties de liaison 50 remplissant les passages 41, 51 formés dans la traverse 3 et le montant 5 par leurs zones en retrait respectives 23, 33 se chevauchant.

En se reportant aux figures 1 et 4, une partie de liaison 50 est reçue dans chaque passage arrière 41. Elle traverse le passage arrière 41 considéré et enveloppe les portions 43, 45, 46 et 47 des bords de la traverse 3 et du montant 5 délimitant le contour du passage arrière 41. La partie de liaison 50 recouvre la surface intérieure de la traverse 3 et la surface supérieure du montant 5 en s'étendant latéralement et longitudinalement au-delà des portions 43, 45, 46 et 47 des bords de la traverse 3 et du montant 5 délimitant le passage 41. La partie de liaison 50 vient ainsi s'ancrer d'une part sur la première portion 43 du bord de l'échancrure 32 du montant 5, et d'autre part sur la première portion 47 du bord de l'encoche avant 24 de la traverse 3. Ceci permet d'obtenir un ancrage satisfaisant de la partie de liaison 50 sur chacun des corps métalliques constitués par la traverse 3 et la montant 5. Cet ancrage est amélioré par les reliefs 25 et 35 présents sur lesdites portion de bord 43, 47. La partie de liaison 50 assure également le maintien mutuel de la traverse 3 et du montant 5 l'un contre l'autre.

En se reportant aux figures 1 et 5, une partie de liaison 50 est également reçue dans chaque passage avant 51. Elle traverse le passage avant 51 considéré en enveloppant les portions 52, 54 du bord de l'encoche 23 avant de la traverse 3, les portions 58, 60 du bord de l'échancrure 33 avant correspondante du montant 3, et le bord latérale 34 du montant 5 délimitant le passage avant 51. La partie de liaison 50 recouvre la surface intérieure de la traverse 3 et la surface avant du montant 5 en s'étendant latéralement et verticalement au-delà desdites portions de bord 52, 54, 56, 60, 62 et le bord latéral 34.

Le montant 5 et la traverse 3 peuvent être munis de zones en retrait 23 et 33 disposées de façon à définir un passage présentant un contour fermé.

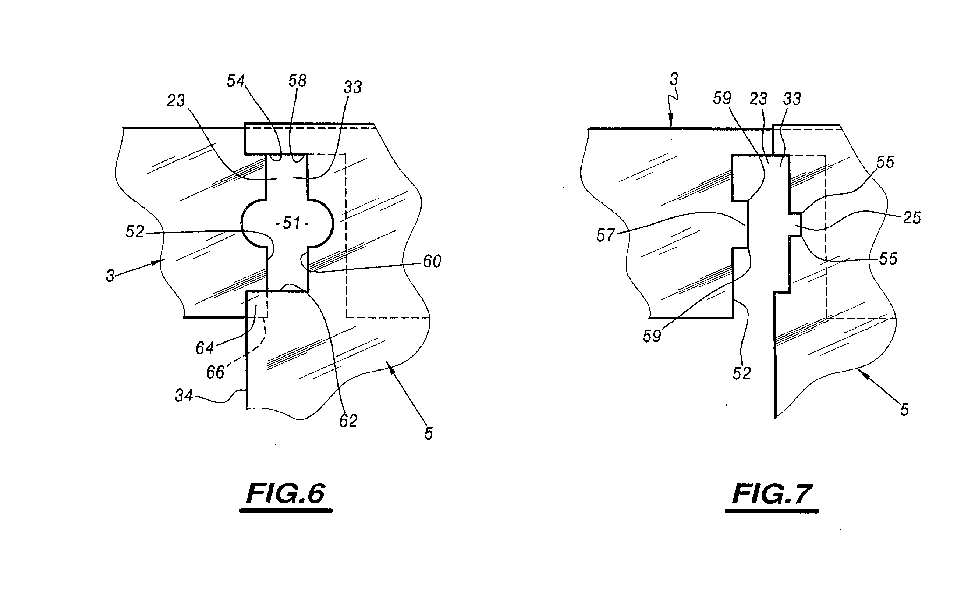

Un mode de réalisation de passage avant 51 à contour fermé est représenté sur la figure 6, où les éléments semblables à ceux de la figure 5 portent les mêmes références. Ce mode de réalisation se distingue de celui de la figure 5 en ce que l'échancrure 33 avant du montant 5 est plus profonde, et en ce que l'encoche 23 avant de la traverse 3 est décalée latéralement (vers la droite sur la figure 6), de façon que la première portion 52 du bord de l'encoche avant 24 se situe latéralement entre le bord latéral 34 du montant 5 et la portion de fond 60 du bord de l'échancrure 33 avant du montant 5.

Une zone 64 du montant 5 formant le coin où se rejoignent le bord latéral 34 du montant 5 et la portion inférieure 62 du bord de l'échancrure 33 avant recouvre l'extrémité inférieure 66 de la première portion 52 du bord de l'encoche avant 24 de la traverse 3, fermant ainsi le contour du passage avant 51.

Le contour du passage 51 est ainsi délimité par la première portion 52 du bord de l'encoche 23 avant, la portion de fond 54 du bord de l'encoche 23 avant et la portion supérieure 58 du bord de l'échancrure 33, la portion de fond 60 du bord de l'échancrure 33, et la portion inférieure 62 du bord de l'échancrure 33, ladite portion inférieure 62 rejoignant la première portion 52 du bord de l'encoche 23 avant.

Les reliefs sous la forme d'évidements 25, 35 en arc de cercle prévus sur les bords des zones en retrait 23, 33 du montant 5 et de la traverse 3 délimitant les passages permettent d'améliorer l'ancrage de la matière plastique sur ces bords. En variante, les bords peuvent présenter des reliefs différents.

Ainsi, et comme illustré sur la figure 7 où les éléments semblables à ceux de la figure 5 portent les mêmes références, une échancrure 33 avant du montant 5 peut présenter un relief sous la forme d'un évidement 25 à profil étagé, avec des angles 55 améliorant l'ancrage de la matière plastique.

Un relief peut aussi être prévu sous la forme d'une saillie, la première partie 52 du bord d'une encoche 23 avant comportant par exemple un ergot 57 en saillie dudit bord 52, l'ergot 57 présentant de préférence des angles 59 pour améliorer l'accrochage de la matière plastique.

L'invention peut parfaitement s'appliquer à la réalisation d'éléments structurels autres que des faces avant.

## Revendications

1. Elément structurel pour véhicule automobile du type comprenant :
- un premier et un deuxième corps métalliques (3, 5) distincts et séparés, des régions de chevauchement (21, 27) du premier et du deuxième corps métalliques (3, 5) se recouvrant, et
- une pièce de renfort en matière plastique (7) surmoulée sur le premier et le deuxième corps métalliques (3, 5), la pièce de renfort (7) comprenant au moins une partie de liaison des corps métalliques,
**caractérisé en ce que** :
- la région de chevauchement (21) du premier corps métallique (3) comprend une première zone discrète (23) en retrait d'un bord du premier corps métallique,
- la région de chevauchement (27) du second corps métallique comprend une second zone discrète (33) en retrait d'un bord du deuxième corps métallique (5), et
- les zones discrètes en retrait des premier et deuxième corps métalliques (3, 5) se recouvrent au moins partiellement et forment un passage traversant (41, 51) recevant la partie de liaison (50) de la pièce de renfort (7) en matière plastique, le contour du passage (41, 51) étant délimité pour partie par un bord (43, 52) de la zone en retrait du premier corps métallique (3) et pour partie par un bord (47, 60) de la zone en retrait du deuxième corps métallique (5).

2. Elément structurel selon la revendication 1, **caractérisé en ce que** le contour du passage (41) est ouvert.

3. Elément structurel selon la revendication 1, **caractérisé en ce que** le contour du passage (51) est fermé.

4. Elément structurel selon l'une des revendications précédentes, **caractérisé en ce qu'**un bord (43, 52, 47, 60) d'une zone en retrait (23, 33) délimitant le contour du passage (41, 51) présente un relief (25, 35) pour améliorer l'ancrage de la partie de liaison (50) sur ledit bord (43, 52, 47, 60).

5. Elément structurel selon la revendication 4, **caractérisé en ce que** le relief est formé par un évidement (25, 35) ménagé dans ledit bord (43, 52, 47, 60).

6. Elément structurel selon la revendication 4, **caractérisé en ce que** le relief est formé par un ergot (57) en saillie dudit bord (52).

7. Elément structurel selon l'une des revendication 4 à 6, **caractérisé en ce que** le relief (25, 57) présente un profil étagé avec des angles (55, 59).

8. Véhicule automobile comprenant un élément structurel selon l'une des revendications précédentes.
